# EUROPEAN PATENT APPLICATION

(11) **EP 4 242 726 A1**
(43) Date of publication of application: **13.09.2023**
(21) Application number: 21888293.4
(22) Date of filing: 09.09.2021
(51) Int. Cl.: G02B 27/01, G02B 6/00

(54) **IMAGE DISPLAY DEVICE AND WEARABLE APPARATUS**

(30) Priority: 09.11.2020 CN 202011241353; 09.11.2020 CN 202022585211 U
(71) Applicant: GUANGDONG OPPO MOBILE TELECOMMUNICATIONS CORP., LTD., Dongguan, Guangdong 523860 (CN)
(72) Inventor: ZHENG, Guang, Dongguan, Guangdong 523860 (CN)
(74) Representative: Taor, Simon Edward William
(86) International application number: PCT/CN2021/117417
(87) International publication number: WO 2022/095594

(57) **Abstract**

Embodiments of the present disclosure provide an image display device and a wearable apparatus. The image display device includes a waveguide assembly and a light-emitting unit. The light-emitting unit is configured to emit a light signal. The light signal is transmitted through the waveguide assembly and exits the waveguide assembly, to form an emergent light signal. A center of the emergent light signal deviates from a center of a viewing angle of a user.

## Description

This application claims priorities to Chinese Patent Application No. 202011241353.2, titled "IMAGE DISPLAY DEVICE AND WEARABLE APPARATUS", filed with China National Intellectual Property Administration on November 9, 2020, and Chinese Patent Application No. 202022585211.X, titled "IMAGE DISPLAY DEVICE AND WEARABLE APPARATUS", filed with China National Intellectual Property Administration on November 9, 2020, the entire disclosures of which are incorporated herein by reference.

### FIELD

The present disclosure relates to the field of electronic technologies, and more particularly, to an image display device and a wearable apparatus.

### BACKGROUND

With the development of intelligent technology, wearable apparatuses having versatile functions are applied in more and more fields and become increasingly more popular among users, and they also bringing great convenience to the users' lives and work. The wearable apparatus can achieve augmented reality functions by means of an image display device included therein. The image display device can project a virtual image in a real scene. However, in the related art, a center of the virtual image displayed by the image display device overlaps with a center of a viewing angle of a user, which affects a display effect.

### SUMMARY

Embodiments of the present disclosure provide an image display device and a wearable apparatus, which can improve a display effect of the image display device.

An embodiment of the present disclosure provides an image display device. The image display device includes a waveguide assembly, and a light-emitting unit configured to emit a light signal. The light signal is transmitted through the waveguide assembly and exits the waveguide assembly, to form an emergent light signal, and wherein a center of the emergent light signal deviates from a center of a viewing angle of a user.

An embodiment of the present disclosure provides a wearable apparatus. The wearable apparatus includes a housing, and the image display device described above. The image display device is disposed in the housing.

### BRIEF DESCRIPTION OF THE DRAWINGS

In order to clearly explain technical solutions of embodiments of the present disclosure, drawings used in description of embodiments are briefly described below. Obviously, the drawings as described below are merely some embodiments of the present disclosure. Based on these drawings, other drawings can be obtained by those skilled in the art without creative effort.
FIG. 1 is a schematic diagram for illustrating directions and angles according to an embodiment of the present disclosure.
FIG. 2 is a first schematic structural diagram of an image display device according to an embodiment of the present disclosure.
FIG. 3 is a schematic structural diagram, taken in a side direction, of an image display device illustrated in FIG. 2.
FIG. 4 is a diagram of a display effect of an image display device illustrated in FIG. 2.
FIG. 5 is a second schematic structural diagram of an image display device according to an embodiment of the present disclosure.
FIG. 6 is a diagram of a display effect of an image display device illustrated in FIG. 5.
FIG. 7 is a side view of an image display device illustrated in FIG. 5.
FIG. 8 is a third schematic structural diagram of an image display device according to an embodiment of the present disclosure.
FIG. 9 is a fourth schematic structural diagram of an image display device according to an embodiment of the present disclosure.
FIG. 10 is a side view of an image display device illustrated in FIG. 9.
FIG. 11 is a schematic top view of a prism in an image display device illustrated in FIG. 10.
FIG. 12 is a schematic three-dimensional diagram of a prism illustrated in FIG. 10.
FIG. 13 is a side view of a prism illustrated in FIG. 10.
FIG. 14 is a fifth schematic structural diagram of an image display device according to an embodiment of the present disclosure.
FIG. 15 is a side view of an image display device illustrated in FIG. 14.
FIG. 16 is a schematic top view of a prism in an image display device illustrated in FIG. 14.
FIG. 17 is a schematic three-dimensional diagram of a prism illustrated in FIG. 14.
FIG. 18 is a side view of a prism illustrated in FIG. 14.
FIG. 19 is another schematic structural diagram of a prism of an image display device according to an embodiment of the present disclosure.
FIG. 20 is a diagram of a display effect obtained when a prism in an image display device illustrated in FIG. 14 is replaced with a prism illustrated in FIG. 19.
FIG. 21 is a sixth schematic structural diagram of an image display device according to an embodiment of the present disclosure.
FIG. 22 is a schematic top view of a prism in an image display device illustrated in FIG. 21.
FIG. 23 is a schematic three-dimensional diagram of a prism illustrated in FIG. 21.
FIG. 24 is a side view of a prism illustrated in FIG. 21.
FIG. 25 is a diagram of a display effect of an image display device illustrated in FIG. 21.
FIG. 26 is a seventh schematic structural diagram of an image display device according to an embodiment of the present disclosure.
FIG. 27 is an eighth schematic structural diagram of an image display device according to an embodiment of the present disclosure.
FIG. 28 is a ninth schematic structural diagram of an image display device according to an embodiment of the present disclosure.
FIG. 29 is a schematic structural diagram of a wearable apparatus according to an embodiment of the present disclosure.
FIG. 30 is another schematic structural diagram of an image display device in a wearable apparatus illustrated in FIG. 29.
FIG. 31 is a side view of a light-blocking member illustrated in FIG. 30.
FIG. 32 is a top view of a light-blocking member illustrated in FIG. 30.
FIG. 33 is another schematic structural diagram of a light-blocking member in a wearable apparatus according to an embodiment of the present disclosure.
FIG. 34 is another schematic structural diagram of a wearable apparatus according to an embodiment of the present disclosure.
FIG. 35 is a schematic structural diagram of a Fabry-Perot spatial filter used as a light-blocking member in a wearable apparatus according to an embodiment of the present disclosure.
FIG. 36 is a schematic diagram of an effect of a light-blocking member illustrated in FIG. 35.
FIG. 37 is yet another schematic structural diagram of a light-blocking member in a wearable apparatus according to an embodiment of the present disclosure.
FIG. 38 is another schematic diagram illustrating a state of a light-blocking member illustrated in FIG. 37.
FIG. 39 is a schematic diagram of a field of view of a human eye according to an embodiment of the present disclosure.
FIG. 40 is a diagram of a correspondence between rainbow pattern and field of view of a human eye.
FIG. 41 is a schematic diagram for illustrating an orientation of the sun relative to a human eye according to an embodiment of the present disclosure.
FIG. 42 is another schematic diagram for illustrating an orientation of the sun relative to a human eye according to an embodiment of the present disclosure.

### DETAILED DESCRIPTION

Technical solutions according to embodiments of the present disclosure will be described clearly and completely below in combination with accompanying drawings of the embodiments of the present disclosure. Obviously, the embodiments described below are only a part of the embodiments of the present disclosure, rather than all embodiments of the present disclosure. On a basis of the embodiments of the present disclosure, all other embodiments obtained by those skilled in the art without creative labor shall fall within the protection scope of the present disclosure.

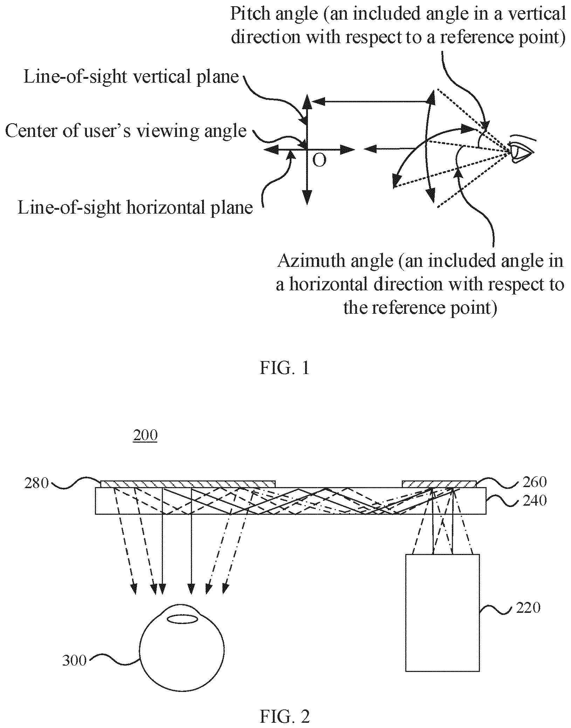

FIG. 1 is a schematic diagram for illustrating directions and angles according to an embodiment of the present disclosure. To facilitate understanding of a propagation path of a light signal of an image display device according to an embodiment of the present disclosure, as an example, when a user is looking horizontally ahead, a center of a viewing angle range of the user is a center O of a viewing angle of the user, and the center O of the viewing angle of the user is located at a center of an image that can be seen by the user. In the embodiments of the present disclosure, a line-of-sight horizontal plane is parallel to a standard horizontal direction, and the line-of-sight horizontal plane is a standard horizontal plane located in the middle of a vertical viewing angle range of the user. A magnitude of a viewing angle from the line-of-sight horizontal plane to a top end of the user's viewing angle range is equal to a magnitude of a viewing angle from the line-of-sight horizontal plane to a bottom end of the user's viewing angle range. In the embodiments of the present disclosure, a line-of-sight vertical plane is parallel to a standard vertical direction and perpendicular to the standard horizontal direction, and the line-of-sight vertical plane of the user is a standard vertical plane located in the middle of a horizontal viewing angle range of the user. A magnitude of a viewing angle from the line-of-sight vertical plane to a left end of the user's viewing angle range is equal to a magnitude of a viewing angle from the line-of-sight vertical plane to a right end of the user's viewing angle range. For example, when the user has a vertical viewing angle range of 150 degrees, the standard horizontal plane located in the middle of the user's vertical viewing angle range, i.e., at 75 degrees of the user's vertical viewing angle range, is the line-of-sight horizontal plane; and when the user has a horizontal viewing angle range of 160 degrees, the standard vertical plane located in the middle of the user's horizontal viewing angle range, i.e., at 80 degrees of the user's horizontal viewing angle range, is the line-of-sight vertical plane. An intersection between the line-of-sight horizontal plane and the line-of-sight vertical plane is in a direction of a central viewing angle of a human eye, i.e., the center O of the viewing angle of the user. A pitch angle is an included angle, in the standard vertical direction, between a user's line of sight and the standard horizontal plane where to the center O of the viewing angle of the user is located. A pitch direction is a direction corresponding to the pitch angle. An azimuth angle is an included angle, in the standard horizontal direction, between user's line of sight and the standard vertical plane where the center O of the viewing angle of the user is located. An azimuthal direction is a direction corresponding to the azimuth angle.

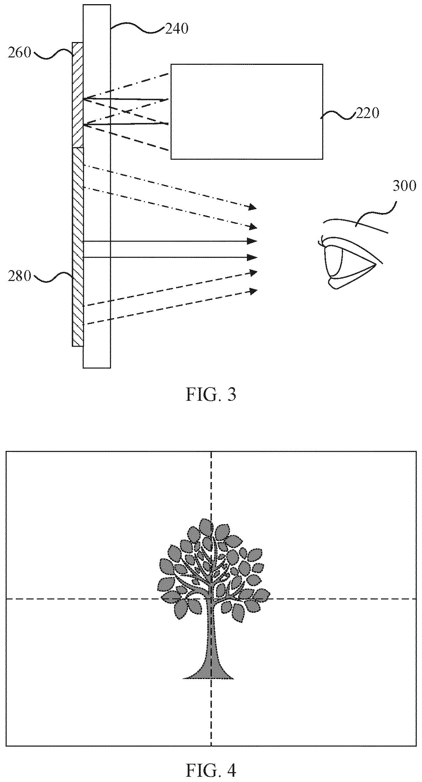

With the continuous improvement and advance of technology, augmented reality wearable apparatuses are gaining more and more attention, accompanied with numerous optical solutions, in which a diffractive waveguide solution has advantages such as good adaptability, thin and light appearance, and low impact on the real field of vision. The diffractive waveguide solution mainly includes a waveguide plate and a light projector. Specifically, a wearable apparatus includes an image display device, details thereof may be referred to FIG. 2. FIG. 2 is a first schematic structural diagram of an image display device according to an embodiment of the present disclosure. An image display device 200 mainly includes a light projector 220, a waveguide plate 240, a couple-in grating 260, and a couple-out grating 280. The waveguide plate 240 and the light projector 220 match each other in terms of angle and direction. It should be noted that, FIG. 2 is a schematic top view of the image display device 200 corresponding to a monocular application, and a structure of an image display device for the other eye (not shown) is axisymmetric to thereto. The light projector 220 is distributed orthogonally with respect to the waveguide plate 240. That is, a light signal emitted by the light projector 220 (light corresponding to solid lines illustrated in the figure) propagates along a normal line of an emergent interface of the light projector 220 to enter the waveguide plate 240 in an orthogonal incidence direction. The light signal is incident on a surface of the couple-in grating 260 in the same orthogonal incidence direction and diffracted. It should be understood that, the light projector 220 has an azimuth angle of 0 degree with reference to the waveguide plate 240. A line-of-sight horizontal plane of a human eye is set as the standard horizontal direction. The waveguide plate 240 is placed in a direction orthogonal to the line-of-sight horizontal plane of a human eye 300. Both the couple-in grating 260 and the couple-out grating 280 are parallel to the waveguide plate 240. A direction of the light signal coupled out by the couple-out grating 280 via the waveguide plate 240 is consistent with a direction of a normal line of the waveguide plate 240, that is, being consistent with a direction of the viewing angle of the human eye. FIG. 3 is a schematic structural diagram, taken in a side direction, of an image display device illustrated in FIG. 2. Referring to FIG. 3, the line-of-sight horizontal plane of the human eye is set as the standard horizontal plane, and a direction of a light signal coupled out by the couple-out grating 280 via the couple-in grating 260 and the waveguide plate 240 is also the standard horizontal direction. The corresponding light projector 220 is distributed orthogonally with respect to the waveguide plate 240. It should be understood that, the light projector 220 has a pitch angle of 0 degree with reference to the waveguide plate 240.

According to the above arrangements, without considering size inconsistency in inner and outer fields of view of the human eye, by only taking a viewing angle of looking straight ahead as a reference, a relative relationship between a real scene and a virtual image generated by the image display device 200 is as illustrated in FIG. 4. In FIG. 4, a box defined by black solid lines represents a field of view of a certain size centered by a position straight in front of the human eye when the human eye looks straight ahead, and an intersection of black dashed lines is a central position of the field of view of the human eye when the human eye looks straight ahead, i.e., the center O of the viewing angle of the user. A dotted tree pattern represents the virtual image generated by the image display device 200. A scene directly viewed by the human eye is an image formed when the center of the virtual image coincides with a center of a viewing angle of the real scene.

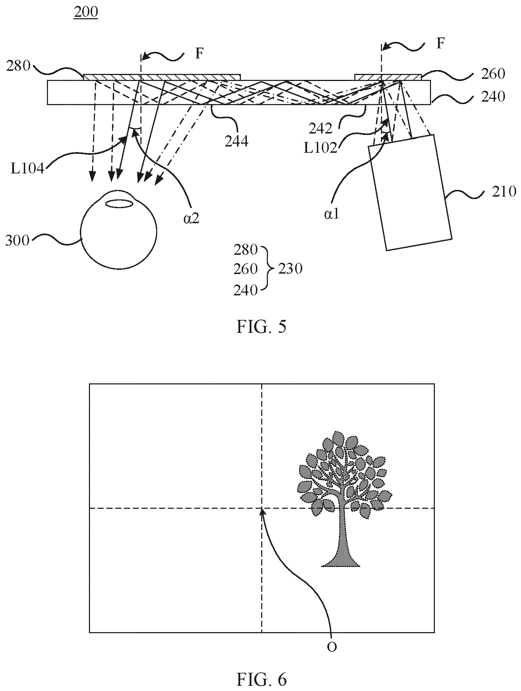

The embodiments of the present disclosure further provide an image display device, details of which may be referred to FIG. 5. FIG. 5 is a second schematic structural diagram of an image display device according to an embodiment of the present disclosure. The image display device 200 includes a light-emitting unit 210 and a waveguide assembly 230. The light-emitting unit 210 is configured to emit a light signal. The light-emitting unit 210 may be a micro projection system. The micro projection system may be a micro light projection path based on a display solution such as a digital light processing (DLP), a liquid crystal on silicon (LCOS) or a micro light emitting diode (MLED), an organic light-emitting diode (OLED), or a micro-LED. An image outputted by the micro projection system may be located at infinity. That is, light of a single field of view outputted by the micro projection system is parallel light. A pupil exit position of the micro projection system is external to its hardware structure. The above-mentioned micro projection system is coupled directly to the waveguide assembly 230. It should be understood that, the light-emitting unit 210 may also be other devices. A specific type of the light-emitting unit 210 is not limited herein. For example, the light projector in the above embodiments is an example of the light-emitting unit 210.

The light-emitting unit 210 is configured to emit a light signal. The light signal is transmitted through the waveguide assembly 230 and exits the waveguide assembly 230, to form an emergent light signal. A center of the emergent light signal deviates from the center O of the viewing angle of the user.

The light signal emitted by the light-emitting unit 210 is conducted via the waveguide assembly 230 and then enters the user's eye 300 to form a virtual image. The light signal corresponding to the real scene enters the user's eye 300 to form a real image. An augmented reality image is formed by superimposing the virtual image and the real image. When the center of the emergent light signal deviates from the center O of the viewing angle of the user, a center of the virtual image formed by the emergent light signal is staggered from the center O of the viewing angle of the user. As it is difficult to perfectly match brightness of the virtual image and brightness of the real scene image, when the brightness of the virtual image is smaller than or greater than brightness of the real scene, the center of the virtual image avoids the center of the viewing angle of the user, i.e., avoiding the center O of the viewing angle of the user that has highest sensitivity. In this way, a visual difference caused by different brightness can be avoided, thereby improving a display effect and user experience.

The light signal emitted by the light-emitting unit 210 is incident on the waveguide assembly 230 at an incident angle to an incident surface 242 of the waveguide assembly 230, to form the emergent light signal exiting at an emergent angle to an emergent surface 244 of the waveguide assembly 230 after the light signal is conducted via the waveguide assembly 230, allowing the center of the emergent light signal to deviate from the center O of the viewing angle of the user in a line-of-sight horizontal plane and/or a line-of-sight vertical plane. The center O of the viewing angle of the user is located at an intersection between the line-of-sight horizontal plane and the line-of-sight vertical plane. The center O of the viewing angle of the user may be an intersection line or an intersection point between the line-of-sight horizontal plane and the line-of-sight vertical plane. The light-emitting unit 210 or the waveguide assembly 230 may be provided as desired to allow an orthographic projection of the center of the emergent light signal on the line-of-sight horizontal plane and/or the line-of-sight vertical plane to be staggered from an orthographic projection of the center O of the viewing angle of the user on the line-of-sight horizontal plane and/or the line-of-sight vertical plane.

A side of the waveguide assembly facing towards the light-emitting unit has a normal line. That is, the incident surface of the waveguide assembly has a normal line. An orthographic projection of the light signal on the line-of-sight horizontal plane and an orthographic projection of a normal line F on the line-of-sight horizontal plane define a first included angle. An orthographic projection of the emergent light signal on the line-of-sight horizontal plane and the orthographic projection of the normal line on the line-of-sight horizontal plane define a second included angle. The first included angle is equal to the second included angle.

In order to explain the image display device in this embodiment, a central light signal of the light signal will be described below as an example. Further referring to FIG. 5, a central light signal L102 is conducted via the waveguide assembly 230 to form an emergent light signal L104. An orthographic projection of the central light signal L102 on the line-of-sight horizontal plane and an orthographic projection of the normal line F on the line-of-sight horizontal plane define a first included angle α1. An orthographic projection of the emergent light signal L104 on the line-of-sight horizontal plane and the orthographic projection of the normal line F on the line-of-sight horizontal plane define a second included angle α2. The first included angle α1 is equal to the second included angle α2. When the emergent light signal L104 deviates from the center O of the viewing angle of the user, a center of a virtual image formed by the emergent light signal L104 is staggered from the center O of the viewing angle of the user, as illustrated in FIG. 6, thereby avoiding the hazards caused by a mutual influence between the virtual image and the center of the viewing angle of the user. For example, the virtual image may disturb the user's observation of a real image in the center of the viewing angle of the user, and thus the user may be unable to pay attention to the real image in time. In addition, as it is difficult to perfectly match the brightness of the virtual image and the brightness of the real scene image, the center of the virtual image is staggered from the center of the viewing angle of the user when the virtual image is merged with the real scene image, which can mitigate a matching problem caused by the different brightness. For example, when the brightness of the virtual image is smaller than or greater than the brightness of the real scene, the center of the virtual image avoids the center of the viewing angle of the user, i.e., avoiding the center of the viewing angle of the user that has the highest sensitivity, thereby reducing the visual difference caused by different brightness and improving the display effect and the user experience. When the brightness of the virtual image is much greater than that of the real scene, by staggering the center of the virtual image from the center of the viewing angle of the user, it is avoided that the most important central region of the real scene cannot be seen clearly due to the excessively high brightness of the virtual image.

It should be noted that, since FIG. 5 is a top view of the image display device, the central light signal L102 in FIG. 5 may be equivalent to a representation of the orthographic projection of the central light signal on the line-of-sight horizontal plane, and the emergent light signal L104 in FIG. 5 may be equivalent to a representation of the orthographic projection of the emergent light signal on the line-of-sight horizontal plane.

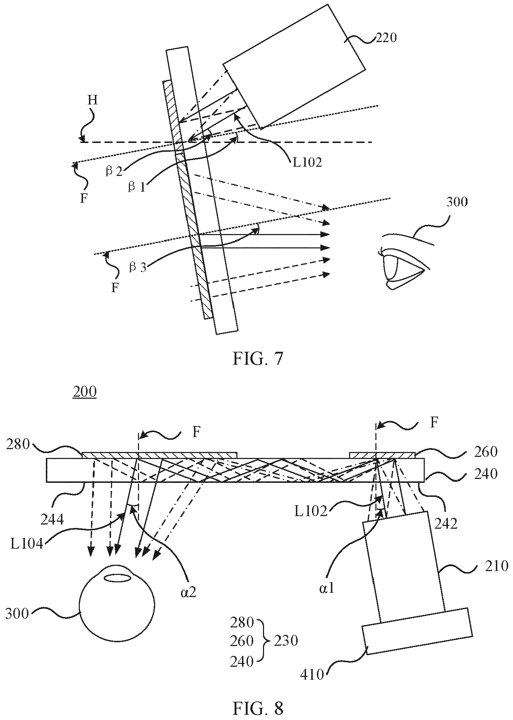

Optionally, FIG. 7 is a side view of an image display device illustrated in FIG. 5. Referring to FIG. 7, the normal line F of the waveguide assembly 230 on the side of the waveguide assembly 230 facing towards the light-emitting unit 210 and a line-of-sight horizontal plane H may define a third included angle β1. That is, the side of the waveguide assembly 230 facing towards the light-emitting unit 210 is non-perpendicular to the line-of-sight horizontal plane. An orthographic projection of the light signal on the line-of-sight vertical plane and an orthographic projection of the normal line F on the line-of-sight vertical plane define a fourth included angle β2. The emergent light signal and the line-of-sight horizontal plane define a fifth included angle. The fourth included angle β2 is equal to the third included angle β1. The fifth included angle is equal to a sum of the fourth included angle β2 and the third included angle β1. The emergent light signal and the normal line F define an included angle β3, where β3=β2=β1=β.

This embodiment is further explained by taking the central light signal L102 of the light signal as an example. The waveguide assembly 230 may be arranged obliquely as desired. That is, the side of the waveguide assembly 230 facing towards the light-emitting unit 210 is non-perpendicular to the line-of-sight horizontal plane H, in such a manner that the normal line F of the side of the waveguide assembly 230 facing towards the light-emitting unit 210 and the line-of-sight horizontal plane define the third included angle β1. In order to ensure that the emergent light signal L104 exiting the waveguide plate assembly 230 after the central light signal L102 is conducted via the waveguide plate assembly 230 can be parallel to the line-of-sight horizontal plane H, i.e., in order to ensure that the central light signal L102 emitted by the light-emitting unit 210 is incident on the waveguide assembly at the fourth included angle β2 to the normal line F in the pitch direction, an orthographic projection of the central light signal L102 on the line-of-sight vertical plane and the orthographic projection of the normal line F on the line-of-sight vertical plane define the fourth included angle β2. Due to β degrees of the included angle between the normal line F and the line-of-sight horizontal plane H, the fifth included angle between the central light signal L102 emitted by the light-emitting unit 210 and the line-of-sight horizontal plane in the pitch direction is of 2β degrees. In this way, an orthographic projection of the emergent light signal L104 on the line-of-sight vertical plane and the orthographic projection of the normal line F on the line-of-sight vertical plane define an included angle β3, and the emergent light signal L104 and the line-of-sight horizontal plane H define an included angle of 0 degree. That is, the emergent light signal L104 is parallel to the line-of-sight horizontal plane.

It should be noted that, since FIG. 7 is the side view of the image display device 200, the central light signal L102 in FIG. 7 may be equivalent to a representation of the orthographic projection of the central light signal on the line-of-sight vertical plane, and the emergent light signal L104 in FIG. 7 may be equivalent to a representation of the orthographic projection of the emergent light signal L 104 on the line-of-sight vertical plane.

It should be understood that, in some other embodiments, the normal line F may also be parallel to the line-of-sight horizontal plane to allow the included angle between the emergent light signal L104 and the line-of-sight horizontal plane H to be of β degrees. That is, an orthographic projection of the center of the virtual image formed by the emergent light signal on the line-of-sight vertical plane is staggered from the orthographic projection of the center O of the viewing angle of the user on the line-of-sight vertical plane.

The waveguide assembly 230 in this embodiment can be set flexibly as desired. The side of the waveguide assembly 230 facing towards the light-emitting unit 210 may be arranged obliquely with respect to the light-emitting unit 210, i.e., non-perpendicular to the line-of-sight horizontal plane or the standard horizontal plane. The side of the waveguide assembly 230 facing towards the light-emitting unit 210 may be set perpendicular to the light-emitting unit 210, i.e., perpendicular to the line-of-sight horizontal plane or the standard horizontal plane.

It should be understood that, the light-emitting unit 210 may be fixedly arranged to allow the central light signal L102 emitted by the light-emitting unit 210 to be incident on the waveguide assembly 230 at a certain incident angle. The waveguide assembly 230 may be set as desired. When the normal line F of the side of the waveguide assembly 230 facing towards the light-emitting unit 210 and the line-of-sight horizontal plane define the third included angle β1, the orthographic projection of the central light signal L102 emitted by the light-emitting unit 210 on the line-of-sight horizontal plane and the orthographic projection of the normal line F on the line-of-sight horizontal plane define the first included angle α1, and the orthographic projection of the central light signal L102 on the line-of-sight vertical plane and the orthographic projection of the normal line F on the line-of-sight vertical plane define the fourth included angle β2, the center of the virtual image formed by the light signal emitted from the light-emitting unit 210 is offset from the center O of the viewing angle of the user in the line-of-sight horizontal plane but not offset from the center O of the viewing angle of the user in the line-of-sight vertical plane. When the normal line F of the side of the waveguide assembly 230 facing towards the light-emitting unit 210 is parallel to the line-of-sight horizontal plane, the orthographic projection of the central light signal L102 emitted by the light-emitting unit 210 on the line-of-sight horizontal plane and the orthographic projection of the normal line F on the line-of-sight horizontal plane define the first included angle α1, and the orthographic projection of the central light signal L102 on the line-of-sight vertical plane and the orthographic projection of the normal line F on the line-of-sight vertical plane define the fourth included angle β2, such that the center of the virtual image formed by the light signal emitted from the light-emitting unit 210 is offset from the center O of the viewing angle of the user in both the line-of-sight horizontal plane and the line-of-sight vertical plane.

The light-emitting unit 210 may be arranged obliquely with respect to the waveguide assembly 230. A positional relation between a light path of the light signal emitted by the light-emitting unit 210 and the waveguide assembly 230 is no longer limited to a mutually orthogonal positional relation, which provides more flexibility for ergonomic design and industrial design (ID) and conducive to achieving better comfort and appearance performance. For example, in the line-of-sight vertical plane, a magnitude of an angle the waveguide assembly 230 can be changed while keeping a position of the virtual image unchanged. The waveguide assembly 230, instead of being arranged at a pitch angle of 0 degree, may be placed at a pitch angle of β. Since the waveguide assembly 230 may be arranged obliquely, the wearable apparatus for accommodating the waveguide assembly 230 can be more flexible in terms of an overall appearance and housing design, which is conducive to enhancing the appearance performance. The overall appearance and a housing of the wearable apparatus can be more ergonomic, contributing to better comfort.

Optionally, the light-emitting unit may also be movably arranged, for example, as illustrated in FIG. 8. FIG. 8 is a third schematic structural diagram of an image display device according to an embodiment of the present disclosure.

The image display device 200 may further include a first transmission mechanism 410. The light-emitting unit 210 is disposed on the first transmission mechanism 410. The first transmission mechanism 410 can drive the light-emitting unit 210 to move, so as to change a magnitude of the incident angle and a magnitude of the emergent angle. The first transmission mechanism 410 can drive the light-emitting unit 210 to move to adjust the incident angle at which the central light signal emitted by the light-emitting unit 210 is incident on the waveguide assembly 230, allowing the center of the emergent light signal to deviate from the center O of the viewing angle of the user.

The side of the waveguide assembly 230 facing towards the light-emitting unit 210 may be perpendicular to the line-of-sight horizontal plane. The first transmission mechanism 410 may change the light-emitting unit 210 to vary the incident angle of the light signal and the corresponding emergent angle of the emergent light signal. In this way, the orthographic projection of the center of the virtual image on the line-of-sight horizontal plane or the line-of-sight vertical plane is staggered from the orthographic projection of the center O of the viewing angle of the user on the line-of-sight horizontal plane or the line-of-sight vertical plane; or the orthographic projections of the center of the virtual image on the line-of-sight horizontal plane and the line-of-sight vertical plane are staggered from the orthographic projections of the center O of the viewing angle of the user on the line-of-sight horizontal plane and the line-of-sight vertical plane, respectively.

The side of the waveguide assembly 230 facing towards the light-emitting unit 210 may also be not perpendicular to the line-of-sight horizontal plane. The first transmission mechanism 410 may change the light-emitting unit 210 to vary the incident angle of the light signal and the corresponding emergent angle of the emergent light signal. In this way, the orthographic projection of the center of the virtual image on the line-of-sight horizontal plane or the line-of-sight vertical plane is staggered from the orthographic projection of the center O of the viewing angle of the user on the line-of-sight horizontal plane or the line-of-sight vertical plane; or the orthographic projections of the center of the virtual image on the line-of-sight horizontal plane and the line-of-sight vertical plane are staggered from the orthographic projections of the center O of the viewing angle of the user on the line-of-sight horizontal plane and the line-of-sight vertical plane, respectively.

The first transmission mechanism 410 may be a micro-motor, an electromagnetic drive, a slider, a sliding table, or a miniature railcar. The projector is fixed to the first transmission mechanism 410. Thus, the first transmission mechanism 410, when moving, can provide an external force required for a movement of the light-emitting unit 210 to move the light-emitting unit 210, thereby changing the incident angle at which the light signal emitted by the light-emitting unit 210 is incident on the waveguide assembly 230.

It should be noted that, a magnitude of the first included angle α1 in this embodiment may be set as desired. For example, the first included angle α1 may be smaller than 16 degrees, or smaller than 12 degrees, or smaller than 8 degrees. It should be understood that, the first included angle α1 may be selected based on the industrial design (ID) of the wearable apparatus or may be designed based on comfort considerations of an offset angle of the virtual image relative to the human eye. It should be noted that, the above-mentioned angular ranges of the first included angle α1 are only exemplary. Those skilled in the art can adjust the range of the first included angle α1 as desired. For example, the first included angle α1 may range from 0 degree to 8 degrees, from 0 degree to 16 degrees, from 2 degrees to 8 degrees, from 3 degrees to 16 degrees, etc.

A magnitude of the fourth included angle β2 in this embodiment may be set as desired. For example, the fourth included angle β2 may be smaller than 16 degrees, or smaller than 12 degrees, or smaller than 8 degrees. It should be understood that, the fourth included angle β2 may be selected based on the industrial design of the wearable apparatus or may be designed based on the comfort considerations of the offset angle of the virtual image relative to the human eye. It should be noted that, the above-mentioned angular ranges of the fourth included angle β2 are only exemplary. Those skilled in the art can adjust the range of the fourth included angle β2 as desired. For example, the fourth included angle β2 may range from 0 degree to 8 degrees, from 0 degree to 16 degrees, from 2 degrees to 8 degrees, from 3 degrees to 16 degrees, etc.

It should be understood that, the first included angle α1 may be equal or unequal to the fourth included angle β2. The first included angle α1 and a selection the fourth included angle β2 may be made separately and independently selected. The selection of the first included angle α1 and the selection of the fourth included angle β2 may be associated with each other. That is, a sum of the first included angle α1 and the fourth included angle β2 falls within a certain range, such as between 0 degree and 8 degrees, between 0 degree and 16 degrees, between 2 degrees and 12 degrees, or between 3 degrees and 16 degrees, etc.

The image display device 200 in this embodiment is suitable for a binocular application. That is, the image display devices 200 are disposed as a symmetrical structure corresponding to two eyes. It should be noted that, since the image display device 200 offsets a display position of the virtual image, binocular image display no longer has a binocular merging display relation. Thus, the image display device 200 in this embodiment is more suitable for a monocular application.

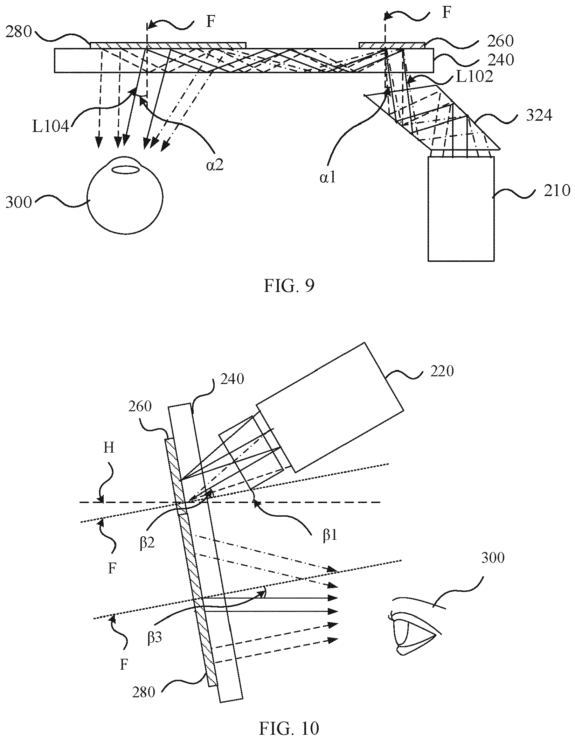

The image display device may also include a prism. FIG. 9 is a fourth schematic structural diagram of an image display device according to an embodiment of the present disclosure. FIG. 10 is a side view of the image display device illustrated in FIG. 9. Referring to FIG. 9 and FIG. 10, a prism 324 is disposed between the waveguide assembly 230 and the light-emitting unit 210. The light-emitting unit 210 has a light-outgoing surface disposed directly opposite to the prism 324. The prism 324 is configured to change a transmission path of the light signal to change a magnitude of the incident angle and a magnitude of the emergent angle.

The prism 324 can change the magnitude of the incident angle and the magnitude of the emergent angle to allow the center of the emergent light signal to be located on the line-of-sight horizontal plane and deviate from the center O of the viewing angle of the user.

For illustration, the central light signal of the light signal is taken as an example. The central light signal L102 emitted by the light-emitting unit 210 is incident on the prism 324 and reflected several times inside the prism 324, and then the central light signal L102 exits the prism 324. The prism 324 may change a transmission angle of the central light signal L102. The central light signal L102, after passing through the prism 324, is incident on the waveguide assembly 230 at the incident angle to the waveguide assembly 230, is conducted via the waveguide assembly 230, and then exits the waveguide assembly 230 at the emergent angle to the emergent surface of the waveguide assembly 230. In this way, the center of the emergent light signal is located on the line-of-sight horizontal plane and deviates from the center O of the viewing angle of the user.

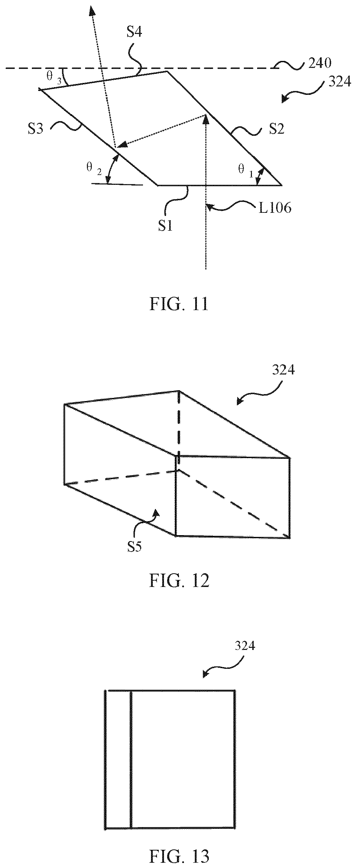

A structure of the prism may be set as desired. For example, referring to FIG. 11 to FIG. 13, FIG. 11 is a schematic top view of a prism in the image display device illustrated in FIG. 10; FIG. 12 is a schematic three-dimensional diagram of the prism illustrated in FIG. 10; and FIG. 13 is a side view of the prism illustrated in FIG. 10. The prism 324 may include a first incident surface S1, a first reflective surface S2, a second reflective surface S3, and a first emergent surface S4. The light signal is conducted sequentially through the first incident surface S1, the first reflective surface S2, the second reflective surface S3, and the first emergent surface S4. The first incident surface S1 and the first reflective surface S2 define a sixth included angle θ1. An extension line of the first reflective surface S2 and the second reflective surface S3 define a seventh included angle θ2. The first emergent surface S4 and a side of the waveguide assembly 230 facing towards the prism 324 define an eighth included angle θ3. A magnitude of the eighth included angle θ3 is equal to that of the first included angle α1. A difference between the sixth included angle θ1 and the seventh included angle θ2 is equal to half of the eighth included angle θ3.

For illustration, the central light signal in the light signal is taken as an example in conjunction with the accompanying drawings. In the figure, a top dashed line represents a surface of the waveguide assembly 230 facing towards the light-emitting unit 210, i.e., the incident surface of the waveguide assembly 230, and a dashed line L106 represents a light path of the emitted central light signal L102. According to a propagation sequence of light, the prism 324 is set to include the first incident surface S1, the first reflective surface S2, the second reflective surface S3, and the first emergent surface S4. The first incident surface S1 is parallel to the surface of the waveguide assembly 230 facing towards the light-emitting unit 210. The sixth included angle θ1 is defined between the first incident surface S1 and the first reflective surface S2. The seventh included angle θ2 is defined between an extension line of the first incident surface S1 and the second reflective surface S3 of the prism 324. The eighth included angle θ3 is defined between the side of the waveguide assembly 230 facing towards the light-emitting unit 210 and the first emergent surface S4 of the prism 324. The magnitude of the eighth included angle θ3 is consistent with that of the first included angle α1 based on a demand that the central light signal of the emergent light is incident on the waveguide assembly 230 at an angle of α to the normal line. Meanwhile, θ1, θ2, and α1 satisfy a relationship of 2(θ1-θ2)=θ3=α1. The light signal emitted by the light-emitting unit 210 is parallel to the normal line of the side of the waveguide assembly 230 facing towards the light-emitting unit 210. The prism 324 can change the transmission angle of the light signal emitted by the light-emitting unit 210, enabling the included angle between the orthographic projection of the light signal of the waveguide assembly 230 on the line-of-sight horizontal plane and the orthographic projection of the normal line on the line-of-sight horizontal plane to be the first included angle α1.

The orthographic projection of the light signal transmitted by the light-emitting unit 220 on the line-of-sight horizontal plane may be parallel to the orthographic projection of the normal line F of the incident surface of the waveguide assembly 240 on the line-of-sight horizontal plane, and by changing the transmission path of the light signal with the prism, the light signal incident on the waveguide assembly 240 can be incident at a predetermined angle, for example, at α1, to the normal line F on the line-of-sight horizontal plane.

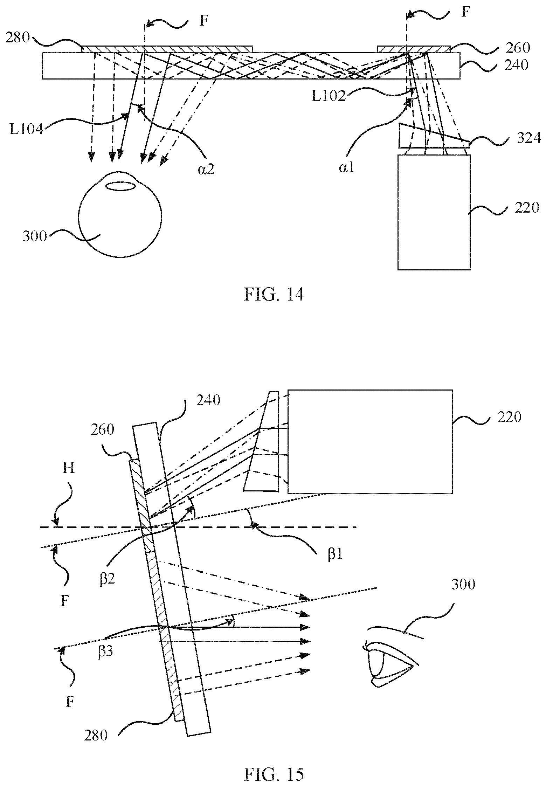

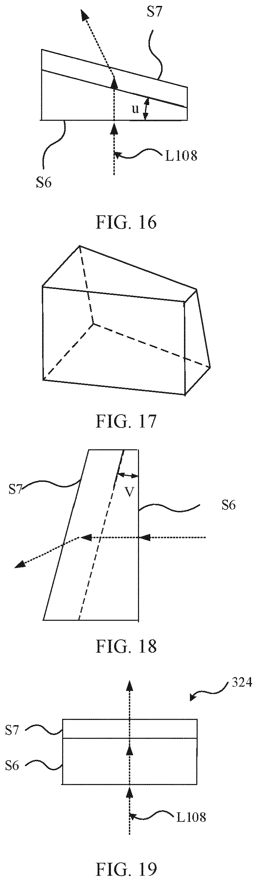

The prism may also be of other structures. For example, referring to FIG. 14 to FIG. 18, FIG. 14 is a fifth schematic structural diagram of an image display device according to an embodiment of the present disclosure; FIG. 15 is a side view of the image display device illustrated in FIG. 14; FIG. 16 is a schematic top view of the prism in the image display device illustrated in FIG. 14; FIG. 17 is a schematic three-dimensional diagram of the prism illustrated in FIG. 14; and FIG. 18 is a side view of the prism illustrated in FIG. 14. The prism 324 may include a second incident surface S6 and a second emergent surface S7. The second incident surface S6 is parallel to the side of the waveguide assembly 230 facing towards the prism 324. An orthographic projection of the second incident surface S6 on the line-of-sight vertical plane and an orthographic projection of the second emergent surface S7 on the line-of-sight vertical plane define a tenth included angle u. An orthographic projection of the second incident surface S6 on the line-of-sight horizontal plane and an orthographic projection of the second emergent surface S7 on the line-of-sight horizontal plane define an eleventh included angle v. The prism 324 has a second refractive index n2. The tenth included angle u and the first included angle α satisfy an equation: n2·sinu=sin (α+u). The eleventh included angle v and the fourth included angle β2 satisfy an equation: n2·sinv=sin (β2+v). In the equations, n2 represents the second refractive index, u represents the tenth included angle, α represents the first included angle, v represents the eleventh included angle, and β2 represents the fourth included angle.

Similarly, for illustration, a central field-of-view light in the light signal is taken as an example.

In the azimuthal direction, the central field-of-view light emitted by the light-emitting unit 210 is incident on a second prism 324 and refracted in the second prism 324. In this way, the central field-of-view light passing through the prism 324 to be incident on the waveguide assembly 230 at the angle α to the normal line F, and exits the waveguide assembly 230 at the angle α to the normal line F. The central field-of-view light incident on the waveguide assembly 230 and the emergent light signal are symmetrical and distributed axially with respect to the normal line F. Thereafter, the emergent light signal enters the human eye 300 to display the virtual image.

In the pitch direction, the normal line F of the side of the waveguide assembly 230 facing towards the prism 324 and the line-of-sight horizontal plane H define an included angle of β1. The central field-of-view light emitted by the light-emitting unit 210 is parallel to the line-of-sight horizontal plane. The central field-of-view light is modulated by the second prism 324, and then incident on the waveguide assembly 230 at an angle β2 to the normal line F in the pitch direction, where β2=β1=β. Since the normal line F is at an included angle β1 to the line-of-sight horizontal plane H, the central field-of-view light exiting through the second prism 324 is at an included angle of 2β to the line-of-sight horizontal plane in the pitch direction. An optical axis of an incident surface of the second prism 324 and the central field-of-view light from the light-emitting unit 210 are in the same direction, both of which are at an included angle of β to the direction of the normal line. The emergent light signal is at an included angle of 0 degree to the line-of-sight horizontal plane. The orthographic projection of the emergent light signal on the line-of-sight vertical plane and the orthographic projection of the normal line on the line-of-sight vertical plane define an included angle of β.

In some embodiments, a dashed line L108 represents a light path of emergent light via the waveguide assembly 230. According to a propagation sequence of light, a refractive index of the second prism 324 is set to n2, and surfaces of the second prism 324 are the second incident surface S6 and the second emergent surface S7. The second incident surface S6 is parallel to the side of the waveguide assembly 230 facing towards the prism 324. The second incident surface S6 of the second prism 324 and the second emergent surface S7 of the second prism 324 define an included angle u in a top view direction. That is, the orthographic projection of the second incident surface S6 on the line-of-sight horizontal plane and the orthographic projection of the second emergent surface S7 on the line-of-sight horizontal plane define an included angle u. An included angle v is defined in a side view direction. That is, the orthographic projection of the second incident surface S6 on the line-of-sight vertical plane and the orthographic projection of the second emergent surface S7 on the line-of-sight vertical plane define the included angle v. Depending on a demand that the emergent light is incident on the waveguide assembly 230 at an azimuth angle α and a pitch angle β, the angle u, the azimuth angle α, the angle v, the pitch angle β, and the refractive index n2 of the second prism 324 satisfy the following relations: n2·sinu=sin (α+u), and n2·sinv=sin (β+v).

In some other embodiments, the prism 324 can change the magnitude of the incident angle and the magnitude of the emergent angle, to allow the center of the emergent light signal to be located at the line-of-sight vertical plane and deviate from the center O of the viewing angle of the user.

FIG. 19 is another schematic structural diagram of the prism of the image display device according to an embodiment of the present disclosure. The embodiment illustrated in FIG. 19 mainly differs from the embodiment illustrated in FIG. 14 in the structure of the prism. In this embodiment, in conjunction with FIG. 18, the prism 324 includes a second incident surface S6 and a second emergent surface S7. The second incident surface S6 is parallel to the side of the waveguide assembly facing towards the prism 324. The orthographic projection of the second incident surface S6 on the line-of-sight vertical plane and the orthographic projection of the second emergent surface S7 on the line-of-sight vertical plane define the eleventh included angle v. The prism 324 has a second refractive index n2. The orthographic projection of the light signal on the line-of-sight vertical plane and the orthographic projection of the normal line F of the side of the waveguide assembly 230 facing towards the light-emitting unit 210 on the line-of-sight vertical plane define the fourth included angle β2. The eleventh included angle v and the fourth included angle β2 satisfy the equation: n2·sinv=sin (β2+v), where n2 represents the second refractive index, v represents the eleventh included angle, and β2 represents the fourth included angle.

In the pitch direction, when the normal line F is parallel to the line-of-sight horizontal plane H, a direction of the light signal emitted by the light-emitting unit 210 is modulated by the second prism 324, and then the light signal is incident on the waveguide assembly 230 at an angle β2 to the normal line F. Since the normal line F is parallel to the line-of-sight horizontal direction, the central field-of-view light exiting the second prism 324 is at an included angle of β to the line-of-sight horizontal direction in the pitch direction. The emergent light signal is at an included angle of β to the line-of-sight horizontal direction, where β2=β1=β.

In the azimuthal direction, the orthographic projection of the central field-of-view light emitted by the light-emitting unit 210 on the line-of-sight horizontal plane is parallel to the orthographic projection of the normal line F on the line-of-sight horizontal plane, and the orthographic projection of the emergent light signal on the line-of-sight horizontal plane is parallel to the orthographic projection of the normal line F on the line-of-sight horizontal plane.

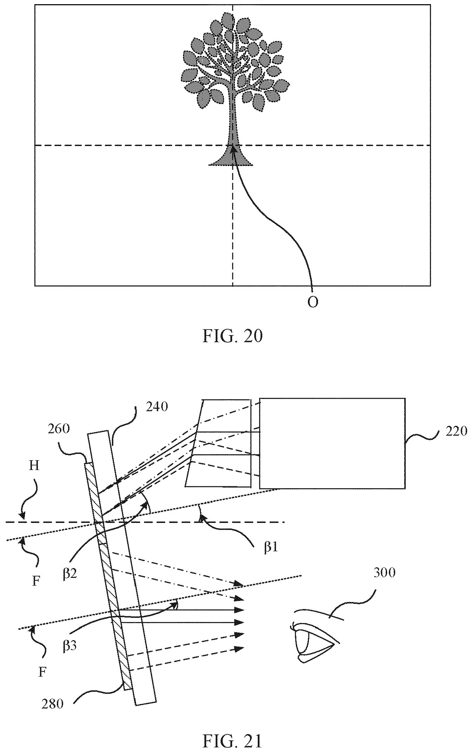

The surface of the waveguide assembly 230 facing towards the prism 324 is perpendicular to the line-of-sight horizontal plane. The orthographic projection of incident light signal on the line-of-sight vertical plane and the orthographic projection of the normal line on the line-of-sight vertical plane define an included angle of β, the orthographic projection of the emergent light signal on the line-of-sight vertical plane and the orthographic projection of the normal line on the line-of-sight vertical plane also define an included angle of β, and the incident light signal on the waveguide assembly 230 and the emergent light signal are symmetrical with respect to the normal line F. Therefore, the orthographic projection of the center of the virtual image formed by the emergent light on the line-of-sight vertical plane deviates from the orthographic projection of the center O of the viewing angle of the user on the line-of-sight vertical plane, as illustrated in FIG. 20.

The prism 324 can also change the magnitude of the incident angle and the magnitude of the emergent angle, to allow the orthographic projection of the center of the emergent light signal on the line-of-sight vertical plane to be staggered from the orthographic projection of the center O of the viewing angle of the user on the line-of-sight vertical plane, and to allow the orthographic projection of the center of the emergent light signal on the line-of-sight horizontal plane to be staggered from the orthographic projection of the center O of the viewing angle of the user on the line-of-sight horizontal plane.

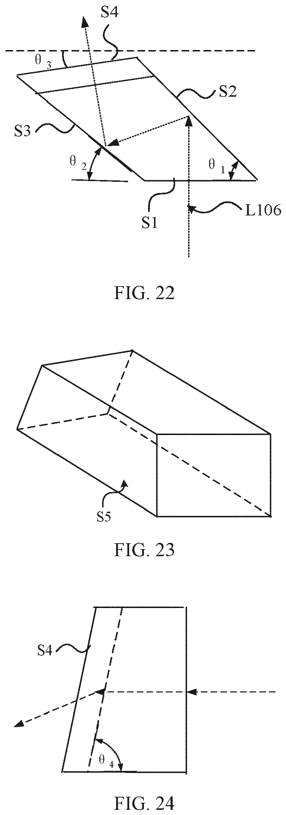

For example, referring to FIG. 21 to FIG. 24, FIG. 21 is a sixth schematic structural diagram of the image display device according to an embodiment of the present disclosure; FIG. 22 is a schematic top view of a prism in the image display device illustrated in FIG. 21; FIG. 23 is a schematic three-dimensional diagram of the prism illustrated in FIG. 21; and FIG. 24 is a side view of the prism illustrated in FIG. 21. The prism 324 includes a first incident surface S1, a first reflective surface S2, a second reflective surface S3, a first emergent surface S4, and a bottom surface S5. The light signal is conducted sequentially through the first incident surface S1, the first reflective surface S2, the second reflective surface S3, and the first emergent surface S4. The first incident surface S1 and the first reflective surface S2 define the sixth included angle θ1. An extension line of the first reflective surface S1 and the second reflective surface S3 define the seventh included angle θ2. The first emergent surface S4 and the waveguide assembly 230 define the eighth included angle θ3. A difference between the sixth included angle θ1 and the seventh included angle θ2 is equal to half of the eighth included angle θ3. The first emergent surface S4 and the bottom surface S5 define a ninth included angle θ4. The light signal and the normal line F of the side of the waveguide assembly 230 facing towards the light-emitting unit 210 in a vertical direction define the fourth included angle β2. The ninth included angle θ4 and the fourth included angle β2 satisfy a relationship of n1·sinθ4=sin (β2+θ4), where n1 represents the refractive index of the prism 324, θ4 represents the ninth included angle, and β2 represents the fourth included angle.

A process of conduction of the light signal through the first incident surface, the first reflective surface, the second reflective surface, and the first emergent surface can refer to the prism in the above embodiments, and thus details thereof will be omitted here. This embodiment mainly differs from the above embodiments is that the first emergent surface S4 and the bottom surface S5 define the ninth included angle θ4. In this embodiment, the ninth included angle θ4 defined by the first emergent surface S4 and the bottom surface S5 and the fourth included angle β2 satisfy the relationship of n1·sinθ4=sin (β2+θ4), where n1 represents the refractive index of the prism 324, θ4 represents the ninth included angle, and β2 represents the fourth included angle.

The first emergent surface S4 and the bottom surface S5 define the ninth included angle θ4 but are not orthogonal to each other, to define an angle of the first emergent surface S4 with respect to the bottom surface S5 as θ4, and θ4, a deflection angle β2, and the refractive index n1 of the first prism 324 satisfy the following relationship of n1·sinθ4=sin(β2+θ4), thereby reducing a match size of the first prism 324 in the vertical direction.

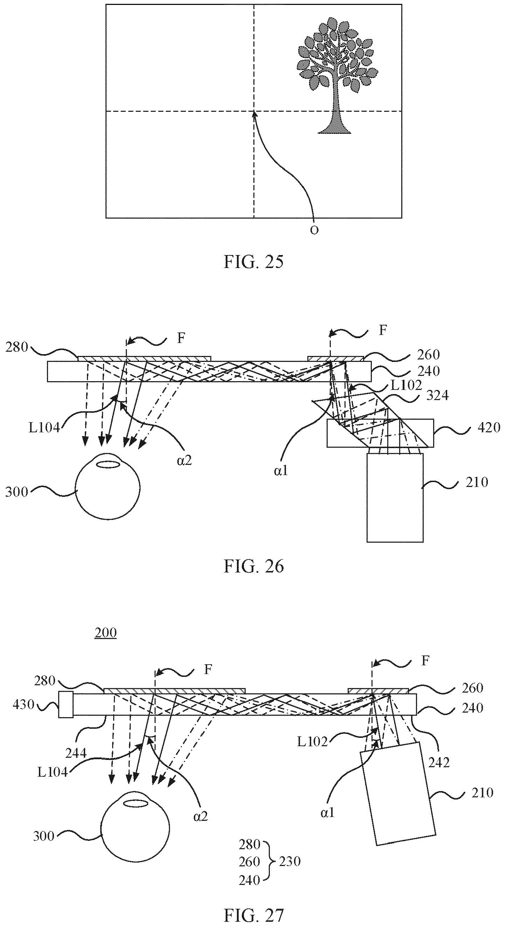

The normal line F is parallel to the line-of-sight horizontal plane. The central light signal L102 emitted by the light-emitting unit 210 is modulated by the first prism 324, and then is incident on the waveguide assembly 230 at an angle of β to the normal line F in the pitch direction. The orthographic projection of the emergent light signal on the line-of-sight vertical plane and an orthographic projection of the line-of-sight horizontal plane on the line-of-sight vertical plane define an included angle of β. The orthographic projection of the center of the virtual image formed by the emergent light on the line-of-sight vertical plane is staggered from the orthographic projection of the center O of the viewing angle of the user on the line-of-sight vertical plane, while the orthographic projection of the center of the virtual image formed by the emergent light on the line-of-sight horizontal plane is also staggered from the orthographic projection of the center O of the viewing angle of the user on the line-of-sight horizontal plane, as illustrated in FIG. 25.

The prism 324 may be fixedly arranged within the image display device 200. The structure of the prism 324 may be that of the prism described in any of the above embodiments, which will not be repeated here.

The prism may also be movably arranged within the image display device. For example, referring to FIG. 26. FIG. 26 is a seventh schematic structural diagram of an image display device according to an embodiment of the present disclosure. The image display device 200 may further include a second transmission mechanism 420. The prism 324 is disposed on the second transmission mechanism 420. The second transmission mechanism 420 can drive the prism 324 to move to change the magnitude of the incident angle and the magnitude of the emergent angle, thereby changing the center of the virtual image formed by the emergent light signal.

The prism 324 is fixed to the second transmission mechanism 420. Thus, the second transmission mechanism 420, when moving, can provide an external force required for a movement of the prism 324, so as to move the prism 324, thereby changing the incident angle at which the light signal emitted by the light-emitting unit 210 is incident on the waveguide assembly 230. For example, the second transmission mechanism 420 may also include a micro-motor and a rotating table. The prism 324 is fixed on the rotating table. The micro-motor can drive the rotating table and the prism 324 to rotate. The second transmission mechanism 420 may also be of other structures, for example, including an electromagnetic drive, a guide rail, a slider, a sliding table, or a miniature railcar, etc.

The waveguide assembly 230 may be fixedly arranged within the display device. A structure of the waveguide assembly 230 may be that of the waveguide assembly 230 described in any of the above embodiments, which will not be repeated herein.

The waveguide assembly may also be movably arranged within the image display device. For example, referring to FIG. 27. FIG. 27 is an eighth schematic structural diagram of an image display device according to an embodiment of the present disclosure. The image display device 200 includes a third transmission mechanism 430. The waveguide assembly 230 is disposed on the third transmission mechanism 430. The third transmission mechanism 430 can drive the waveguide assembly 230 to move, thereby changing the magnitude of the incident angle and the magnitude of the emergent angle.

The waveguide assembly 230 is fixed on the third transmission mechanism 430. Thus, the third transmission mechanism 430, when moving, can provide an external force required for a movement of the waveguide assembly 230, so as to move the waveguide assembly 230, thereby changing the incident angle at which the light signal emitted by the light-emitting unit 210 is incident on the waveguide assembly 230 or the emergent angle of the emergent light signal with respect to the emergent surface of the waveguide assembly 230. For example, the third transmission mechanism 430 may also include a micro-motor and a rotating table. The waveguide assembly 230 is fixed on the rotating table. The micro-motor can drive the rotating table and the waveguide assembly 230 to rotate. The third transmission mechanism 430 may also be of other structures, for example, including an electromagnetic drive, a guide rail, a slider, a sliding table, or a miniature railcar, etc.

For example, the third transmission mechanism 430 may drive the waveguide assembly 230 to change an angle between the normal line of the side of the waveguide assembly 230 facing towards the light-emitting unit 210 and the line-of-sight horizontal plane and/or the line-of-sight vertical plane. For example, the third transmission mechanism 430 drives the waveguide assembly 230 to move to allow the normal line of the waveguide assembly 230 on the side thereof facing towards the light-emitting unit 210 to be parallel to or at β degrees to the line-of-sight horizontal plane, i.e., to allow the side of the waveguide assembly 230 facing towards the light-emitting unit 210 to be perpendicular or non-perpendicular to the line-of-sight horizontal plane. For example, the third transmission mechanism 430 drives the waveguide assembly 230 to move, allowing the normal line of the waveguide assembly 230 on the side thereof facing towards the light-emitting unit 210 to be parallel to or at α degrees to the line-of-sight vertical plane, i.e., allowing the side of the waveguide assembly 230 facing towards the light-emitting unit 210 to be perpendicular or not perpendicular to the line-of-sight vertical plane. Thus, a projection of the center of the virtual image formed by the emergent light signal on the line-of-sight horizontal plane and/or the line-of-sight vertical plane is staggered from a projection of the center O of the viewing angle of the user on the line-of-sight horizontal plane and/or the line-of-sight vertical plane.

It should be understood that, the waveguide assembly 230 in the above embodiments may include a waveguide plate 240, a couple-in grating 260, and a couple-out grating 280. The couple-in grating is disposed on a side of the waveguide plate facing away from the light-emitting unit 210. The couple-out grating is disposed on the side of the waveguide plate facing away from the light-emitting unit 210. The light signal emitted by the light-emitting unit 210 and incident on the waveguide assembly 230 exits the couple-out grating subsequent to sequential diffraction at the couple-in grating, a total reflection in the waveguide plate, and diffraction at the couple-out grating, and forms the emergent light signal.

The waveguide plate is arranged to face towards the light-emitting unit 210. A couple-in grating 22 is disposed on a side of the waveguide plate facing away from the light-emitting unit 210, and is positioned opposite to the light-emitting unit 210. A couple-out grating 23 is also disposed on the side of the waveguide plate facing away from the light-emitting unit 210, and is positioned opposite to the human eye 200.

The light signal emitted by the light-emitting unit 210 is incident on the waveguide plate, is transmitted through the waveguide plate to the couple-in grating, and is diffracted at the couple-in grating, such that the diffracted light signal satisfies a total reflection condition of the waveguide plate. The light signal is then totally reflected in the waveguide plate, conducted to the couple-out grating 23, and diffracted at the couple-out grating 23. The light signal diffracted by the couple-out grating 23 passes through the waveguide plate and exits the waveguide plate at a set emergent angle. The exiting light signal is received by the human eye 200. Thus, the human eye can thus observe the virtual image corresponding to the light signal.

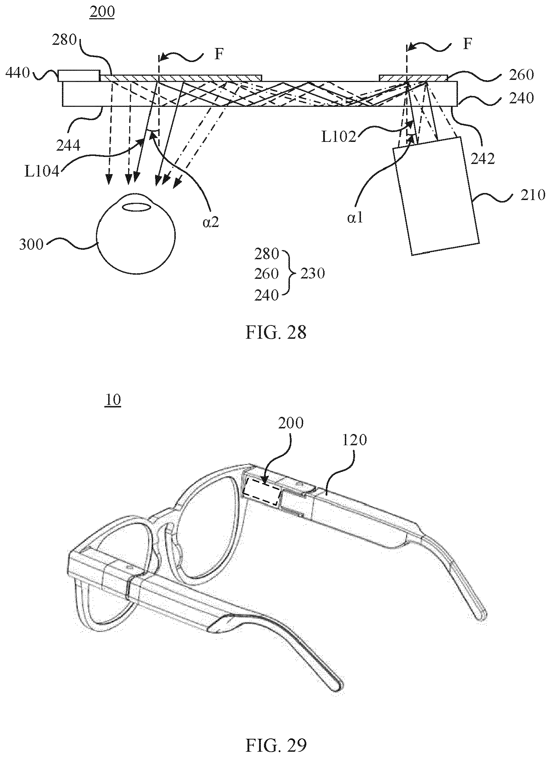

FIG. 28 is a ninth schematic structural diagram of an image display device according to an embodiment of the present disclosure. Referring to FIG. 28, the image display device 200 can further include a fourth transmission mechanism 440. The couple-out grating is disposed on the fourth transmission mechanism 440. The fourth transmission mechanism 440 can drive the couple-out grating to move, thereby changing a magnitude of the emergent angle. The fourth transmission mechanism 440 can drive the couple-out grating to move, thereby changing the magnitude of the emergent angle of the emergent light signal with respect to the emergent surface of the waveguide assembly 230. For example, the fourth transmission mechanism 440 may change an angle between the couple-out grating and the line-of-sight horizontal plane and/or the line-of-sight vertical plane. The fourth transmission mechanism 440 can cause the couple-out grating to be perpendicular or not perpendicular to the line-of-sight horizontal plane and the line-of-sight vertical plane.

The fourth transmission mechanism 440 may include a guide rail and a micro drive motor. The couple-out grating is disposed on the guide rail. The micro drive motor can drive the couple-out grating to move along the guide rail to change the emergent angle of the emergent light signal. The fourth transmission mechanism 440 may also be other mechanisms, such as a magnetic drive, a guide rail, etc. This embodiment does not limit the specific structure of the fourth transmission mechanism 440.

It should be noted that, the image display device in this embodiment may select one or more of the first transmission mechanism, the second transmission mechanism, the third transmission mechanism, and the fourth transmission mechanism as desired. For example, the image display device may include the first transmission mechanism for moving the light-emitting unit and the second transmission mechanism for moving the prism. For another example, the image display device may include the third transmission mechanism for moving the waveguide assembly and the first transmission mechanism for moving the light-emitting unit. For yet another example, the image display device may include the second transmission mechanism for moving the prism and the fourth transmission mechanism for moving the couple-out grating.

The embodiments of the present disclosure further provide a wearable apparatus, which may be an augmented reality display apparatus such as a pair of intelligent glasses, an intelligent helmet, etc. For a better understanding of the wearable apparatus, as an example, the wearable apparatus may be a pair of intelligent glasses, which is described in detail below. FIG. 29 is a schematic structural diagram of a wearable apparatus according to an embodiment of the present disclosure. Referring to FIG. 29, a wearable apparatus 10 includes a housing 120 and the image display device 200. The image display device 200 is disposed in the housing 120. The structure of the image display device 200 may be the structure of the image display device described in any of the above embodiments and thus will not be repeated herein.

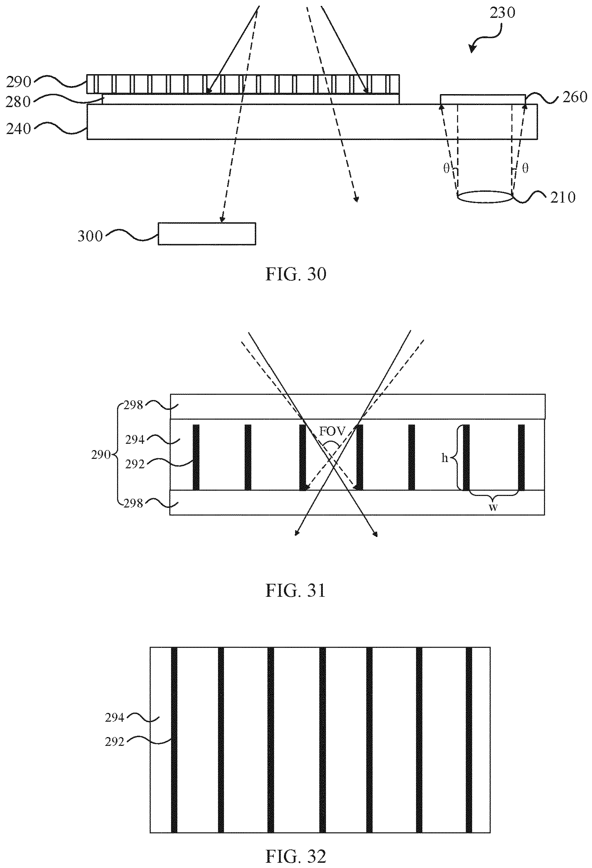

The image display device in this embodiment may also include a light-blocking member. Referring to FIG. 30, FIG. 30 is another schematic structural diagram of an image display device in a wearable apparatus illustrated in FIG. 29.

A light-blocking member 290 is disposed on a side of the waveguide assembly 230 and configured to block external light having an incident angle greater than a predetermined field-of-view angle from entering the waveguide assembly 230. The waveguide assembly 230 has a waveguide field of view. The predetermined field-of-view angle is smaller than or equal to the waveguide field of view. The light-blocking member 290 is disposed on the side of the waveguide assembly 230 and can block the external light greater than the predetermined field-of-view angle from entering the waveguide assembly 230. In this way, the external light, which is incident on the waveguide assembly 230 and may produce irregular light diffraction and a dispersion phenomenon, can be blocked from entering the waveguide assembly 230, thereby alleviating a rainbow pattern issue and enhancing the display effect.

The waveguide assembly 230 includes the waveguide plate 240, the couple-in grating 260, and the couple-out grating 280. The light-emitting unit 220 is configured to emit the light signal. The light signal enters the couple-in grating 260 and exits through the couple-out grating 280. A maximum included angle between the light signal entering the couple-in grating 260 and a central axis of the light signal is an emission included angle θ. The predetermined field-of-view angle is 2 times the emission included angle θ. The light signal is diffracted by the couple-in grating 260, enters the waveguide plate 240, and is fully reflected at the waveguide plate 240, until it is diffracted at the couple-out grating 280 and outputted to the user's eye 300. The emission included angle θ may be understood as a maximum incident angle at which a total emission can be performed in the waveguide plate 240. Incident light greater than the first included angle cannot be fully reflected in the waveguide plate 240, while incident light smaller than or equal to the first included angle can be fully reflected in the waveguide plate 240.

The light-blocking member 290 may be disposed on a side of the waveguide assembly 230 facing towards the external light. In some embodiments, the light-blocking member 290 may be disposed on a side of the couple-out grating 280 facing away from the waveguide plate 240 or on a side of the waveguide plate 240 facing towards the external light.

FIG. 31 is a side view of a light-blocking member illustrated in FIG. 30. FIG. 32 is a top view of a light-blocking member illustrated in FIG. 30. In conjunction with FIG. 31 and FIG. 32, the light-blocking member 290 may include a plurality of light-blocking portions 292, and a plurality of light-transmitting portions 294 alternately arranged with the plurality of light-blocking portions 292. The light-blocking portion 292 can absorb or block light and may be made of a light-absorbing material. The light-transmitting portion 294 allows light to pass through smoothly and may be made of a transparent material.

For example, the light-blocking portion 292 may be a column of black ink and the light-transmitting portion 294 may be a transparent resin. The black ink is a periodic structure in a form of a black column. Light of different wavelengths is absorbed when incident on the black ink. The transparent resin is a light-transmitting material. Light of different wavelengths can be transmitted and propagated with a low loss when incident on the transparent resin. Thus, any two adjacent light-blocking portions 292 can be configured to block the external light having the incident angle greater than the predetermined field-of-view angle. The light-transmitting portion 294 can be configured to transmit external light having an incident angle smaller than or equal to the predetermined field-of-view angle. External light within the predetermined field-of-view angle can be transmitted normally, while external light beyond the predetermined field-of-view angle cannot be transmitted and will be blocked and absorbed by the black ink.

The light-blocking member 290 may further include two substrates 298. The light-blocking portions 292 and the light-transmitting portions 294 are disposed between the two substrates 298.

The light-transmitting portion 294 and the light-blocking portion 292 satisfy a relationship of tanα=w/h, and the predetermined field-of-view angle satisfies a relationship of FOV=arctanα, where w represents a width of the light-transmitting portion 294 between any two adjacent light-blocking portions 292, h represents a height of the light-blocking portion 292, and FOV represents the predetermined field-of-view angle.

Through adjusting the width of the light-transmitting portion 294 and the height of the light-blocking portion 292, the FOV of the light-blocking member 290 is adjusted to be smaller than or close to the FOV of a diffractive light waveguide. The light greater than the FOV of the diffractive light waveguide is blocked and absorbed by the light-blocking portion 292 and cannot irradiate the light waveguide, thereby avoiding the dispersion phenomenon, i.e., a rainbow pattern effect.

The plurality of light-blocking portions 292 of the light-blocking member 290 is arranged at intervals along a first direction, e.g., a transverse direction or a longitudinal direction. That is, the light-blocking portions 292 and the light-transmitting portions 294 are periodically alternated in one direction.

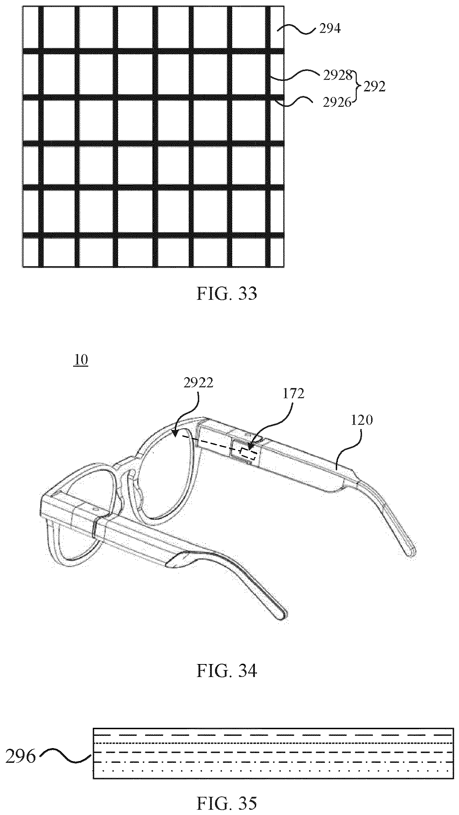

It should be understood that, the light-blocking member 290 capable of blocking the external light greater than the predetermined field-of-view angle from entering the waveguide assembly 230 may also be of other structures. For example, the plurality of light-blocking portions may be arranged at intervals and each may be in a shape of ring, and the plurality of light-blocking portions may be concentric rings. For another example, as illustrated in FIG. 33, the plurality of light-blocking portions 292 may include first light-blocking portions 2926 arranged in a first direction and second light-blocking portions 2928 arranged in a second direction. The first direction is perpendicular to the second direction. The light-blocking member 290 can block or absorb the external light greater than the predetermined field-of-view angle, regardless of a direction in which the external light is incident on the light-blocking member 290.

The first light-blocking portion 2926 and the second light-blocking portion 2928 may be made of an electrochromic material. The wearable apparatus 10 may further include a light source detector that can detect a light angle. When the light source detector detects that the external light enters the light-blocking member 290 in the first direction, the first light-blocking portion 2926 is controlled to be in a light-transmitting state and the corresponding second light-blocking portion 2928 is controlled to be in a colored state. When the light source detector detects that the external light enters the light-blocking member 290 in the second direction, the first light-blocking portion 2926 is controlled to be in the colored state and the second light-blocking portion 2928 is controlled to be in the light-transmitting state. When the external light is incident in the first direction, the first light-blocking portion 2926 parallel to the external light is controlled to be in the light-transmitting state, and the second light-blocking portion 2928 perpendicular to the external light is controlled to be in the colored state and exerts light-blocking function. When the external light is incident in the second direction, the second light-blocking portion 2928 parallel to the external light is controlled to be in the light-transmitting state, and the first light-blocking portion 2926 perpendicular to the external light is controlled to be in the colored state and exerts light-blocking function.

FIG. 34 is another schematic structural diagram of a wearable apparatus according to an embodiment of the present disclosure. Referring to FIG. 34, the wearable apparatus 10 further includes a light sensor 172 configured to detect a light intensity of the external light. The light-blocking portion includes an electrochromic portion 2922. When the light intensity detected by the light sensor 172 is greater than a predetermined light intensity threshold, the electrochromic portion 2922 is controlled to be in a colored state to block the external light having the incident angle greater than the predetermined field-of-view angle. When the light intensity detected by the light sensor 172 is smaller than or equal to the predetermined light intensity threshold, the electrochromic portion 2922 is controlled to be in a light-transmitting state to transmit the external light through the corresponding light-blocking portion.

When the external ambient light has a relatively high light intensity, the electrochromic portion 2922 of the light-blocking portion is controlled to be in the colored state, for example being black, through cooperation between the light sensor 172 and the electrochromic portion 2922, thereby blocking the external light having the incident angle greater than the predetermined field-of-view angle. In this way, a rainbow pattern problem can be alleviated. When the external ambient light has a relatively low light intensity, the electrochromic portion 2922 of the light-blocking portion is controlled to be in the light-transmitting state, for example, being transparent, which enables the external light to be substantially unblocked, thereby providing the user with a maximum field of view and an ambient image having maximum brightness.

The electrochromic portion in any of the above embodiments may include a plurality of electrochromic layers, and each electrochromic layer can be independently controlled. The height of the light-blocking portion can be controlled by controlling the different electrochromic layers to be in the colored state or the light-transmitting state. It should be understood that, the electrochromic layer in the colored state can block and absorb the external light, while the electrochromic layer in the light-transmitting state cannot block and absorb the external light. That is, the height of the light-blocking portion is determined by the electrochromic layer in the colored state. The field of view of the light-blocking member can be changed by controlling the different electrochromic layers to be in the colored state. For example, the electrochromic portion includes five electrochromic layers, which can be controlled to be in the colored state through pressing a button. For example, the fifth electrochromic layer blocks external light at 50 degrees from entering the waveguide assembly, the third electrochromic layer blocks external light at 45 degrees from entering the waveguide assembly, and the first electrochromic layer blocks external light at 40 degrees from entering the waveguide assembly. The respective electrochromic layers may also be automatically controlled to be in the colored state correspondingly by recognizing angles of the external light, thereby blocking external light greater than 40 degrees, or 45 degrees, or 50 degrees, etc., from entering the waveguide assembly. The light source detector can identify an angle of external light greater than a predetermined intensity to control different electrochromic layers to be in the colored state.

In this embodiment, electrochromic phenomenon refers to that an optical property of a material (such as reflectance, transmittance, absorption, etc.) undergoes a stable, reversible color change under an external electric field. The electrochromic phenomenon is manifested in a reversible change of a color and a reversible change of transparency of an appearance of a material. A material having the electrochromic property can be referred to as an electrochromic material. A device made of the electrochromic material can be referred to as an electrochromic unit.

The electrochromic portion includes a first transparent electrode, an electrochromic material, and a second transparent electrode. The first transparent electrode, the electrochromic material, and the second transparent electrode are arranged in sequence. The first transparent electrode and the second transparent electrode are configured to control the electrochromic material to switch between the colored state and the light-transmitting state. For example, when a voltage is applied between the first transparent electrode and the second transparent electrode, the electrochromic material undergoes a redox reaction under the voltage, resulting in a color change. For example, a color of the electrochromic material changes to black, or dark grey, or other colors that block or absorb the external light.

For a better understanding of the electrochromic portion, the electrochromic portion will be described in detail below.

The electrochromic portion may include two conductive layers (i.e., the first transparent electrode and the second transparent electrode) stacked on each other, a color change layer between the two conductive layers, an electrolyte layer, and an ion storage layer.

The conductive layer may be a transparent conductive layer with excellent conductivity and good optical transmittance. The transparent conductive layer may be at least one of indium tin oxide (ITO), tin oxide (SnO2), antimony tin oxide (ATO), or the like.

The color change layer, i.e., the electrochromic material, is a core layer of the electrochromic portion and is a layer where a color change reaction takes place. The color change layer may be classified into an inorganic electrochromic material and an organic electrochromic material. The inorganic electrochromic material may be tungsten trioxide (WO3) or nickel oxide (NiO). The organic electrochromic material mainly includes polythiophenes and their derivatives, viologen, tetrathiafulvalene, metallic phthalocyanine compounds, etc.

The electrolyte layer is made of special conductive materials, such as a liquid electrolyte material containing a solution of lithium perchlorate, sodium perchlorate, etc., or a solid electrolyte material.

The ion storage layer serves as a charge storage layer in the electrochromic portion. That is, when the redox reaction takes place in the material of the color change layer, the ion storage layer can store corresponding counter ions, and thus a charge balance of the entire electrochromic portion can be ensured.

When a voltage is applied between the two transparent conductive layers, the redox reaction takes place in the color change layer of the electrochromic portion under the voltage, resulting in a color change. For example, when the voltage applied between the two transparent conductive layers is changed from 0 V to 1.2 V, the electrochromic portion may change from white to black. When the voltage applied between the two transparent conductive layers changes from 1.2 V to -0.2 V, the electrochromic portion may change from black to white.

It should be understood that, the electrochromic portion can have the following property that: after a voltage is applied to change the electrochromic portion to a color, the electrochromic portion can retain that color for a long period of time even if the voltage is removed. For example, when a voltage of 1.2 V is applied, the electrochromic portion changes to black, and may remain black for more than 24 hours after the voltage is removed.

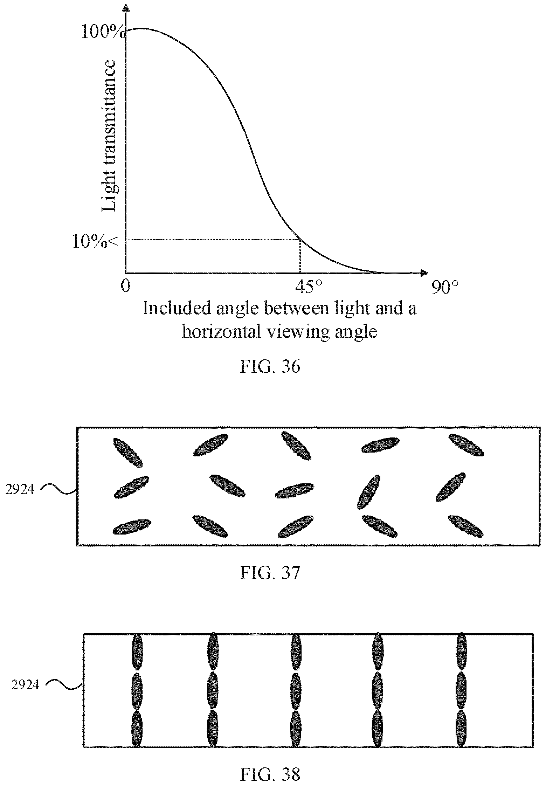

It should be understood that, the light-blocking member may also be of other structures. For example, as illustrated in FIG. 35 and FIG. 36, the light-blocking member 290 includes a Fabry-Perot spatial filter 296 configured to block the external light greater than the predetermined field-of-view angle. The Fabry-Perot spatial filter 296 is a filter having different light transmittances at different angles and made of stacked materials having different refractive indices, and it can ensure that the external light greater than the predetermined field-of-view angle has an extremely low transmittance, thereby blocking or obstructing the external light greater than the predetermined field-of-view angle. For example, a transmittance of external light at an included angle greater than or equal to 45 degrees with respect to a horizontal viewing angle is reduced to smaller than 10%.

In another example, as illustrated in FIG. 37 and FIG. 38, the light-blocking member 290 further includes a liquid crystal layer 2924 configured to block the external light greater than the predetermined field-of-view angle. The liquid crystal layer 2924 has different arrangements under control at different voltages to control an angle at which light is transmitted. The liquid crystal layer 2924 in an initial state cannot select specific angles of the external light for transmission. When voltage control is applied to the liquid crystal layer 2924, i.e., when the liquid crystal layer 2924 is in an electrically-controlled state, the liquid crystal layer 2924 selects the external light having a certain FOV angular selection for transmission. The liquid crystal molecules in the liquid crystal layer 2924 are controlled to have different deflection angles under different voltages, thereby selecting the external light having specific angles. The liquid crystal layer 2924 is conducted when electrically energized, and thus has an organized liquid crystal arrangement, facilitating the transmission of light. When the liquid crystal layer 2924 is not electrically energized, the liquid crystal arrangement becomes chaotic, and thus the light is prevented from being transmitted.

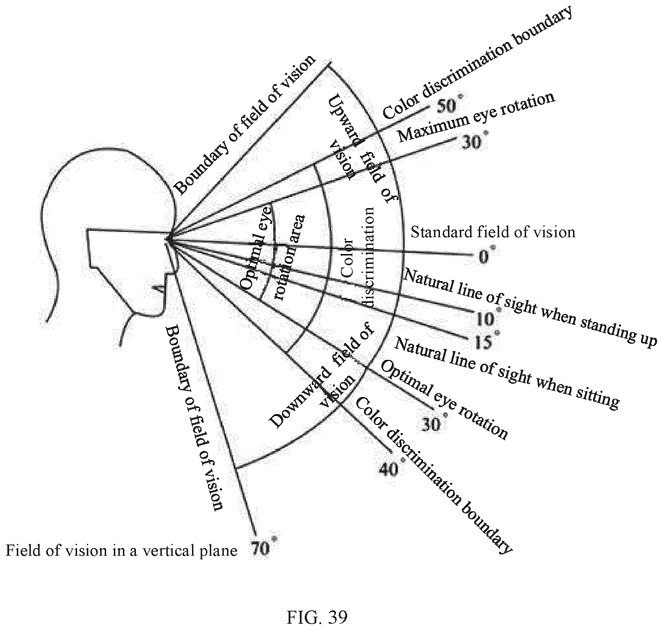

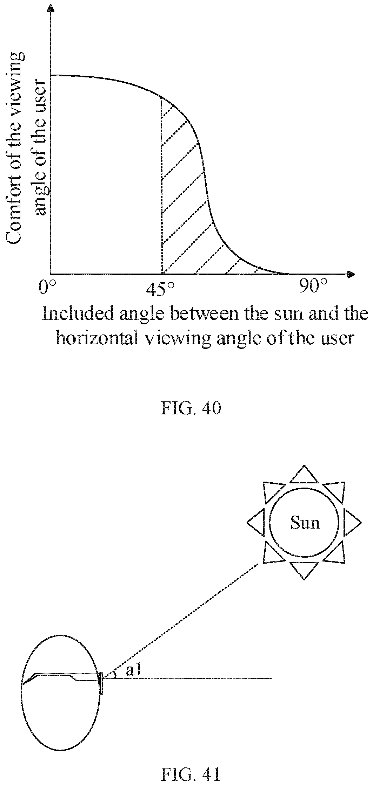

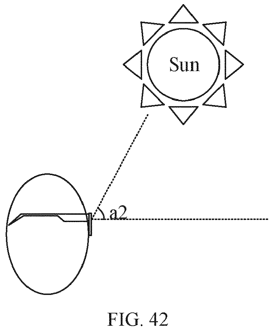

It should be understood that, as illustrated in FIG. 39, a maximum rotation angle of the human eye is 30 degrees for an upward rotation and 30 degrees for a downward rotation, and color discrimination boundaries of the human eye are a boundary of 50 degrees upwards and a boundary of 40 degrees downwards. In the external environment, the sun serves as the main strong light source, and the produced rainbow patterns are mainly concentrated in a scope ranging from 45 degrees to 90 degrees, as illustrated in FIG. 40. The produced rainbow patterns are mainly concentrated in a shaded area in FIG. 40. Therefore, the predetermined field-of-view angle may be set to be smaller than or equal to 45 degrees, thereby solving the rainbow pattern problem. The predetermined field-of-view angle should be understood as an included angle between the sun and the user's horizontal viewing angle. By blocking or absorbing the external light having an included angle greater than or equal to 45 degrees with respect to the user's horizontal viewing angle, the external light can be prevented from entering the waveguide assembly, thereby preventing the rainbow pattern problem. For example, as illustrated in FIG. 41 and FIG. 42, sunlight may be incident on the user's eyes at an included angle of a1, which is smaller than the predetermined field-of-view angle, with respect to the user's horizontal viewing angle, and sunlight cannot enter the waveguide assembly to form the rainbow patterns at an included angle of a2, which is greater than the predetermined field-of-view angle, with respect to the user's horizontal viewing angle.

In some embodiments, the intelligent glasses may be used as a visual intelligent auxiliary equipment for a mobile terminal. For example, the intelligent glasses may display information such as time, weather, step counts, etc., to the user. In particular, the information may be displayed and presented to the user through lenses of the intelligent glasses. The intelligent glasses may also provide functions such as arrival reminders, timed alarms, voice calls, to-do list reminders, etc. The user may access instant messages, answer voice calls, or do other things through the intelligent glasses, without holding the mobile terminal. The mobile terminal may be kept in a pocket or a bag of the user and does not need to be taken out for any operation. Also, a display interface of the mobile terminal may be obtained through the intelligent glasses, such as a main interface, a notification bar, an application interface, etc., of the mobile terminal.

A voice module may be integrated in the intelligent glasses. The voice module can realize voice recognition and voice control functions, for example, controlling display of the intelligent glasses in accordance with voice, obtaining voice and activating a translation function (to facilitate communication between the user and foreigners), and playing audio (e.g., music, radio, etc.).

A positioning module may further be integrated in the intelligent glasses. The intelligent glasses can realize a navigation function based on the positioning module and display navigation information such as a map or road guidance on the lenses. The navigation information may also be superimposed onto a live image to realize an augmented reality display function, and thus the user can travel based on the navigation information displayed on the lenses, without looking down at the mobile terminal. In addition, navigation may be assisted through playing navigation voice via the voice module.

A touch module may further be integrated in the intelligent glasses. Functional modules of the intelligent glasses can be controlled via the touch module, e.g., functional modules for answering voice calls, turning off the alarm clock, adjusting the volume, or the like.

The lenses of the intelligent glasses may be sunglass lenses. The intelligent glasses not only have a powerful intelligent function, but also possess a pleasant appearance and satisfying practicality. It should be understood that, lenses capable of performing a display function may be specialized lenses, such as lenses superimposed with an ultra-thin, highly-translucent, flexible display screen.

In the description of the present disclosure, the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality" means at least two, unless otherwise specifically defined.

A number of embodiments or examples are provided in the present disclosure to implement different structures of the present disclosure. To simplify the description of the present disclosure, components and arrangements of particular examples are described above, which are, of course, examples only and are not intended to limit the present disclosure.

The image display device and the wearable apparatus provided by the embodiments of the present disclosure are described in detail above. In the specification, the principles and embodiments of the present disclosure are explained by means of specific examples. The description of the above embodiments is only used to facilitate the understanding of the present disclosure. In addition, those skilled in the art, based on concepts of the present disclosure, can make changes to these specific embodiments and the scope of application. In summary, contents of this specification should not be construed as limitations of the present disclosure.

## Claims

1. An image display device, comprising:
a waveguide assembly; and
a light-emitting unit configured to emit a light signal, wherein the light signal is transmitted through the waveguide assembly and exits the waveguide assembly, to form an emergent light signal, and wherein a center of the emergent light signal deviates from a center of a viewing angle of a user.

2. The image display device according to claim 1, wherein the light signal emitted by the light-emitting unit is incident on the waveguide assembly at an incident angle to an incident surface of the waveguide assembly and then conducted via the waveguide assembly, to form the emergent light signal exiting at an emergent angle to an emergent surface of the waveguide assembly, and to allow the center of the emergent light signal to deviate from the center of the viewing angle of the user in a line-of-sight horizontal plane and/or a line-of-sight vertical plane, the center of the viewing angle of the user being located at an intersection between the line-of-sight horizontal plane and the line-of-sight vertical plane.

3. The image display device according to claim 2, wherein:
an orthographic projection of the light signal on the line-of-sight horizontal plane and an orthographic projection of a normal line of a side of the waveguide assembly facing towards the light-emitting unit on the line-of-sight horizontal plane define a first included angle;
an orthographic projection of the emergent light signal on the line-of-sight horizontal plane and the orthographic projection of the normal line on the line-of-sight horizontal plane define a second included angle; and
the first included angle is equal to the second included angle.

4. The image display device according to claim 3, wherein:
the normal line and the line-of-sight horizontal plane define a third included angle;
an orthographic projection of the light signal on the line-of-sight vertical plane and an orthographic projection of the normal line on the line-of-sight vertical plane define a fourth included angle;
the emergent light signal and the line-of-sight horizontal plane define a fifth included angle;
the fourth included angle is equal to the third included angle; and
the fifth included angle is equal to a sum of the fourth included angle and the third included angle.

5. The image display device according to any one of claims 2 to 4, further comprising a first transmission mechanism, wherein:
the light-emitting unit is disposed on the first transmission mechanism; and
the first transmission mechanism is capable of driving the light-emitting unit to move to change a magnitude of the incident angle and a magnitude of the emergent angle.

6. The image display device according to claim 1, further comprising a prism disposed between the waveguide assembly and the light-emitting unit, wherein:
the light-emitting unit has a light-outgoing surface disposed directly opposite to the prism; and
the prism is configured to change a transmission path of the light signal to change a magnitude of the incident angle and a magnitude of the emergent angle.

7. The image display device according to claim 6, wherein the magnitude of the incident angle and the magnitude of the emergent angle are changed by the prism to allow the center of the emergent light signal to be located on the line-of-sight horizontal plane and deviate from the center of the viewing angle of the user.

8. The image display device according to claim 7, wherein:
the prism comprises a first incident surface, a first reflective surface, a second reflective surface, and a first emergent surface;
the light signal is conducted sequentially through the first incident surface, the first reflective surface, the second reflective surface, and the first emergent surface;
the first incident surface and the first reflective surface define a sixth included angle;
an extension line of the first reflective surface and the second reflective surface define a seventh included angle;
the first emergent surface and the waveguide assembly define an eighth included angle; and
a difference between the sixth included angle and the seventh included angle is equal to half of the eighth included angle.

9. The image display device according to claim 6, wherein the magnitude of the incident angle and the magnitude of the emergent angle are changed by the prism to allow the center of the emergent light signal to be located on the line-of-sight vertical plane and deviate from the center of the viewing angle of the user.

10. The image display device according to claim 7, wherein:
the prism comprises a second incident surface and a second emergent surface;
the second incident surface is parallel to a surface of the waveguide assembly facing towards the prism;
an orthographic projection of the second incident surface on the line-of-sight horizontal plane and an orthographic projection of the second emergent surface on the line-of-sight horizontal plane define an eleventh included angle;
the prism has a second refractive index;
an orthographic projection of the light signal on the line-of-sight vertical plane and an orthographic projection of a normal line of a side of the waveguide assembly facing towards the light-emitting unit on the line-of-sight vertical plane define a fourth included angle; and
the eleventh included angle and the fourth included angle satisfy an equation: n2·sinv=sin (β2+v), where n2 represents the second refractive index, v represents the eleventh included angle, and β2 represents the fourth included angle.

11. The image display device according to claim 4, wherein the magnitude of the incident angle and the magnitude of the emergent angle are changed by the prism, to allow an orthographic projection of the center of the emergent light signal on the line-of-sight vertical plane to be staggered from an orthographic projection of the center of the viewing angle of the user on the line-of-sight vertical plane, and to allow an orthographic projection of the center of the emergent light signal on the line-of-sight horizontal plane to be staggered from an orthographic projection of the center of the viewing angle of the user on the line-of-sight horizontal plane.

12. The image display device according to claim 11, wherein:
the prism comprises a first incident surface, a first reflective surface, a second reflective surface, a first emergent surface, and a bottom surface;
the light signal is conducted sequentially through the first incident surface, the first reflective surface, the second reflective surface, and the first emergent surface;
the first incident surface and the first reflective surface define a sixth included angle;
an extension line of the first reflective surface and the second reflective surface define a seventh included angle;
the first emergent surface and the waveguide assembly define an eighth included angle;
a difference between the sixth included angle and the seventh included angle is equal to half of the eighth included angle;
the first emergent surface and the bottom surface define a ninth included angle;
the light signal and a normal line of a side of the waveguide assembly facing towards the light-emitting unit define a fourth included angle in a vertical direction; and
the ninth included angle and the fourth included angle satisfy a relationship of n1•sine4=sin (β2+θ4), where n1 represents a refractive index of the prism, θ4 represents the ninth included angle, and β2 represents the fourth included angle.

13. The image display device according to any one of claims 6 to 12, further comprising a second transmission mechanism, wherein:
the prism is disposed on the second transmission mechanism; and
the second transmission mechanism is capable of driving the prism to move to change the magnitude of the incident angle and the magnitude of the emergent angle.

14. The image display device according to any one of claims 1 to 4, further comprising a third transmission mechanism, wherein:
the waveguide assembly is disposed on the third transmission mechanism; and
the third transmission mechanism is capable of driving the waveguide assembly to move to change a magnitude of the incident angle and a magnitude of the emergent angle.

15. The image display device according to any one of claims 1 to 4, wherein the waveguide assembly comprises:
a waveguide plate;
a couple-in grating disposed on a side of the waveguide plate facing away from the light-emitting unit; and
a couple-out grating disposed on the side of the waveguide plate facing away from the light-emitting unit, wherein:
the light signal incident on the waveguide assembly exits the waveguide assembly subsequent to diffraction at the couple-in grating, a total reflection in the waveguide plate, and diffraction at the couple-out grating, sequentially.

16. The image display device according to claim 15, further comprising a fourth transmission mechanism, wherein:
the couple-out grating is disposed on the fourth transmission mechanism; and
the fourth transmission mechanism is capable of driving the couple-out grating to move to change a magnitude of the emergent angle.

17. A wearable apparatus, comprising:
a housing; and
the image display device according to any one of claims 1 to 8, the image display device being disposed in the housing.

18. The wearable apparatus according to claim 17, wherein the image display device further comprises:
a light-blocking member disposed on a side of the waveguide assembly and configured to block external light having an incident angle greater than a predetermined field-of-view angle from entering the waveguide assembly.

19. The wearable apparatus according to claim 18, wherein:
the light-blocking member comprises a plurality of light-blocking portions, and a plurality of light-transmitting portions alternately arranged with the plurality of light-blocking portions;
any two adjacent light-blocking portions of the plurality of light-blocking portions are configured to block the external light having the incident angle greater than the predetermined field-of-view angle; and
each of the plurality of light-transmitting portions is configured to transmit external light having an incident angle smaller than or equal to the predetermined field-of-view angle.

20. The wearable apparatus according to claim 18, further comprising a light sensor configured to detect a light intensity of the external light, wherein:
each of the plurality of light-blocking portions comprises an electrochromic portion;
when the light intensity detected by the light sensor is greater than a predetermined light intensity threshold, the electrochromic portion is controlled to be in a colored state to block the external light having the incident angle greater than the predetermined field-of-view angle; and
when the light intensity detected by the light sensor is smaller than or equal to the predetermined light intensity threshold, the electrochromic portion is controlled to be in a light-transmitting state to allow the external light to pass through the corresponding light-blocking portion.

21. The wearable apparatus according to claim 18, wherein the light-blocking member comprises a Fabry-Perot spatial filter configured to block the external light having the incident angle greater than the predetermined field-of-view angle.

22. The wearable apparatus according to claim 18, wherein the light-blocking member comprises a liquid crystal layer configured to block the external light having the incident angle greater than the predetermined field-of-view angle.
